Europäisches Patentamt

European Patent Office

Office européen des brevets

(11) Publication number: **0 426 219 A1**

## EUROPEAN PATENT APPLICATION

(21) Application number: 90202699.6

(22) Date of filing: 11.10.90

(51) Int. Cl.⁵: **C05F 3/00**

(30) Priority: 11.10.89 NL 8902517

(43) Date of publication of application:
08.05.91 Bulletin 91/19

(84) Designated Contracting States:
AT BE CH DE DK ES FR GB GR IT LI LU NL SE

(71) Applicant: **BS-WATERSYSTEMS B.V.**
De Boelelaan 7/3
NL-1083 HJ Amsterdam(NL)

(72) Inventor: **Willemse, Martinus Wilhelmus Maria**
**Gravin Adahof 14**
NL-2114 DW Vogelenzang(NL)

(74) Representative: **Kooy, Leendert Willem et al**
**OCTROOIBUREAU VRIESENDORP & GAADE**
P.O. Box 266
NL-2501 AW The Hague(NL)

(54) Process for the conversion of manure into manure components.

(57) The process of converting manure into manure components, in which in a thickening process aqueous components are separated from the manure resulting in thickened manure and in which components released during the thickening process are processed in a process for working up residual substances, said aqueous components being subjected to a nitrification process in the process for working up residual substances, in which process ammonia from the aqueous components is converted into nitrite and/or nitrate-containing effluent which is recycled to the thickening process.

## PROCESS FOR CONVERTING MANURE INTO MANURE COMPONENTS

The invention relates to a process for converting manure into manure components, in which aqueous components are separated from the manure in a thickening process, resulting in thickened manure, and in which components released during the thickening process are processed in a process for working up residual substances.

Such a process is known from Dutch patent application 85 01374 laid open to public inspection. This document discloses a process in which in the thickening process the manure is divided through reverse osmosis into a first flow of clean water and a second flow containing the original components from the manure in a higher concentration. In the process for working up residual substances the second flow is freed of ammonia and phosphate in a number of process steps, leaving an effluent which can be used as a manure component, either as it is or after further concentration. The manure component is substantially free of ammonia and phosphate as a result of the applied process. Ammonia and phosphate are further processed in the process for working up residual substances and discharged as lime sludge or condensate, respectively.

The process as referred to above has the drawback that upon removing the ammonia, nitrogen is also removed from the manure component to a large extent, whereas nitrogen actually is a major component of manure. This is also true for phosphate that is removed from the manure component in the form of lime sludge.

Another drawback of the proposed process is that a condensate of ammonia with water and phosphate-containing lime sludge is Obtained which can hardly be disposed of directly into the environment.

It is the aim of the invention to provide a process of the above-identified type by which the drawbacks referred to above can be prevented. For that purpose the process according to the invention is characterized in that the aqueous components in the process for working up residual substances are subjected to a nitrification process in which ammonia from the aqueous components is converted into nitrite and/or nitrate containing effluent which is recycled to the thickening process.

According to the invention the manure is divided into a solid cake which is processed further in the thickening process so as to become the final product, and into aqueous components containing i.a. minerals and nitrogen in the form of ammonia which are further processed in the process for working up residual substances. By subjecting the aqueous components to a nitrification process as part of the process for working up residual substances it is attained that the ammonia is fully converted into nitrite and/or nitrate, so that these nutriments are preserved. The nitrite and/or nitrate-containing effluent from the nitrification process can simply be recycled to the thickening process, the nitrites and/or nitrates being assimilated in the solid substance and thus be availabe as a manure component in the final product.

When processing manure, the main object is to reduce the volume to the highest possible extent. The manure available for treatment contains approx. 10% of components that can be converted to a solid state and a surplus consisting mainly of water. In order to reduce transportation expenses and e.g. facilitate the export of manure components, it is important to obtain a large portion of solid substance in the manure components and to remove as much water as possible from the original manure for this purpose.

Therefore a further elaboration of the invention is characterized in that the nitrite and/or nitrate containing effluent is concentrated by means of water extraction before it is recycled. Practice has taught that water extraction through reverse osmosis and subsequent evaporation is an effective process from an energy-saving point of view.

Another embodiment of the process according to the invention is characterized in that the nitrite and/or nitrate containing effluent in the thickening process is sprayed over the already or at least partly thickened manure and drying takes place.

The solid cake that is obtained after a first division of the manure comprises about 30% dry substance. This solid cake is subjected to a further drying process, which is e.g. performed in a fluidized bed drier, and remaining water is disposed of. Preferably the nitrite and/or nitrate containing effluent is sprayed on the solid cake, causing the nitrite and/or nitrate to penetrate the solid cake and to remain there after the water has evaporated.

In order to further increase the manure components content in the obtained dry manure components, a further embodiment is characterized in that sludge originating from the nitrification process is recycled to the thickening process. This sludge, which contains dead bacteria and minerals, is preferably supplied at the entrance of the thickening process, so that its solid components will be incorporated in the eventually obtained dry manure components without any further processing.

It is often preferred to dry the thickened manure further until a dry manure component is obtained. As the condensate occurring during the drying process has an ammonia content that is too high to simply discharge it, a further embodiment of the process according to the invention is characterized in that the thickened manure is dried and the condensate formed during that process is subjected to the nitrification process.

Another embodiment of the process according to the invention is characterized in that the thickened manure is dried and that the discharge air formed in said process is subjected to the nitrification process. Discharge air that is the result of the drying process of the thickened manure has a high concentration of ammonia. This embodiment provides sufficient purification of the discharge air so that it can be disposed of to the atmosphere.

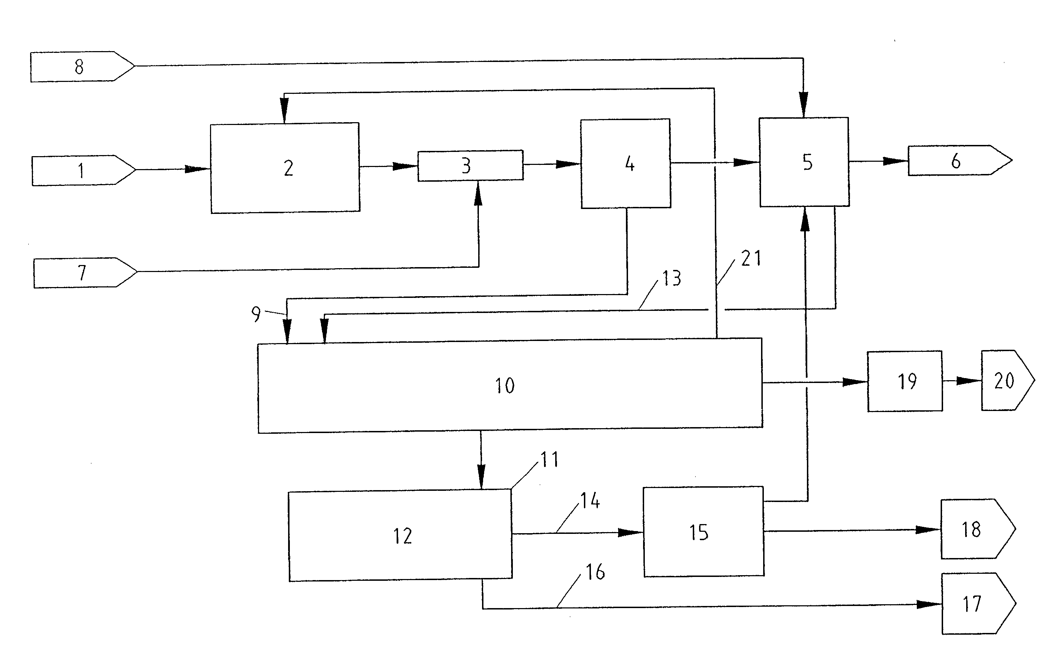

The invention will be elucidated hereinafter on the basis of the drawing, in which a non-restrictive block diagram represents the distinctive steps of an embodiment of a process according to the invention.

The manure indicated by reference numeral 1 is fed to a buffer vessel 2. The buffer vessel functions as a temporary storage means for the manure and as a blending vessel for blending manure from various suppliers to a manure of average composition. In the blender the manure is blended with a coagulation agent from storage vessel 7. Finely suspended material in the manure will then coagulate into flakes. A part of the thickening process is performed in the draining unit 4. The draining unit can be devised as a strainer belt press. The solid cake from the draining unit is conveyed to a drying unit 5 and therein even more moisture is extracted from the cake with the aid of air from the air supply 8. Drier unit 5 can be a fluidized bed drier. The manure components, which are presently dry, are subsequently conveyed to a pelleting and packaging unit 6.

The thickening process as described in this examplary embodiment is therefore performed in the series of units 1-6. In this series of units the solids content increases from approx. 10% in the supplied manure to approx. 85% in the pelleted dry manure components. During the thickening process only very small quantities of substances are added to the original manure so as to attain a volume reduction that is consistent with the increase of the solids content. Tests have shown that it is possible to attain a weight reduction of 88%.

Apart from the solid cake, a filtrate is obtained in the draining unit 4, which filtrate is an aqueous component which is led to a nitrification unit 10 along the path indicated by the arrow 9. In the nitrification unit 10, ammonia from the filtrate is converted into nitrite and/or nitrate containing liquid which is passed to a concentration unit, generally indicated by reference numeral 11. The concentration unit 11 comprises a reverse osmosis device 12 from which the permeate is passed along conduit 16 to a discharge unit 17. The permeate is sufficiently pure for direct disposal. The nitrite and/or nitrate containing reject from the reverse osmosis device is passed by means of a conduit 14 to an evaporator 15 for further concentration. The pulp originating from the evaporator 15 and containing, apart from nitrite and/or nitrate, minerals from the original manure, is sprayed as effluent in the drying unit 5 over the solid cake arranged therein and is thus assimilated by the solid cake. In the drier unit 5 the blend of solid cake and pulp is dried until it is the dry manure that is conveyed to the pelleting and packaging unit 6. Both the condensate and the discharge air from the drier unit 5 contain a high concentration of ammonia and are passed via conduit 13 to the nitrification unit.

Sludge from the nitrification process, mainly containing dead bacteria and particles that have slipped through the draining stage, is recycled to the buffer vessel 2 along path 21 and will thus be incorporated in the dry manure components.

Destillate from evaporator 15 is sufficiently pure for direct disposal at discharge point 18. Air originating from the nitrification unit 10 is conducted through the bio-filter 19, containing active carbon or humid peat, and any smell components that might affect the environment are disposed of by bacteria. The purified air is discharged into the atmosphere through discharge 20.

## Claims

1. Process for converting manure into manure components, in which aqueous components are separated from the manure in a thickening process, resulting in thickened manure, and in which components released during the thickening process are processed in a process for working up residual substances, **characterized in that** the aqueous components in the process for working up residual substances are subjected to a nitrification process in which ammonia from the aqueous components is converted into nitrite or nitratecontaining which is recycled to the thickening process.

2. Process according to claim 1, **characterized in that** the nitrite and/or nitrate-containing effluent is concentrated by means of water extraction before it is recycled.

3. Process accordig to any of the preceding claims, **characterized in that** the nitrite and/or nitrate-containing effluent in the thickening process is sprayed over the already or at least partly thickened manure and in that the thickened manure is dried.

4. Process according to any of the preceding claims, **characterized in that** sludge from the nitrification process is recycled to the thickening process.

5. Process according to any of the preceding claims, **characterized in that** the thickened manure is dried and in that the condensate formed in that process is subjected to the nitrification process.

6. Process according to any of the preceding claims, **characterized in that** the thickened manure is dried and in that the discharge air formed in that process is subjected to the nitrification process.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | DE-A-2 602 085 (E. ASENDORF)<br>* claims *<br>— — — | 1,4 | C 05 F<br>3/00 |
| X,Y | NL-A-6 912 898 (E. ROHRER)<br>* page 9, lines 5 - 28; claims *<br>— — — | 1,4,5 | |
| Y | DE-A-2 452 830 (WÄRME KRAFT GESELLSCHAFT HAMBURG & CO)<br>* page 2 *<br>— — — | 4 | |
| X | NL-A-7 900 224 (BAECK ENGINEERING)<br>* claims *<br>— — — | 1,4 | |
| A | EP-A-0 315 713 (JOSEF VAN OPBERGEN GMBH & CO KG)<br>* column 4, line 41 - column 5, line 12 *<br>— — — | 2,3 | |
| Y | EP-A-0 265 027 (PROMEST B.V.)<br>* column 2, line 36 - column 4, line 38; claims ; figure 1 *<br>— — — — — | 5 | |
| | | | TECHNICAL FIELDS SEARCHED (Int. Cl.5)<br><br>C 05 F |

The present search report has been drawn up for all claims

| Place of search | Date of completion of search | Examiner |
|---|---|---|
| The Hague | 21 February 91 | SCHUT,R.J. |